# EUROPÄISCHE PATENTSCHRIFT

(11) **EP 0 673 472 B1**
(45) Veröffentlichungstag und Bekanntmachung des Hinweises auf die Patenterteilung: **29.01.1997**
(21) Anmeldenummer: 93924573.4
(22) Anmeldetag: 02.11.1993
(51) Int. Cl.: F01N 3/20, F01N 9/00

(54) **VERFAHREN ZUR STEUERUNG DER AUFHEIZUNG EINES ELEKTRISCH BEHEIZBAREN KATALYTISCHEN KONVERTERS**
PROCESS FOR CONTROLLING THE HEATING OF AN ELECTRICAL HEATABLE CATALYTIC CONVERTER
PROCEDE DE COMMANDE DU CHAUFFAGE D'UN CONVERTISSEUR CATALYTIQUE CHAUFFABLE ELECTRIQUEMENT

(30) Priorität: 09.12.1992 DE 4241494
(43) Veröffentlichungstag der Anmeldung: 27.09.1995
(73) Patentinhaber: Emitec Gesellschaft für Emissionstechnologie mbH, 53797 Lohmar (DE)
(72) Erfinder: Maus, Wolfgang, D-51429 Bergisch Gladbach (DE); Brück, Rolf, D-51429 Bergisch Gladbach (DE); Swars, Helmut, D-51429 Bergisch Gladbach (DE)
(74) Vertreter: Kahlhöfer, Hermann, Dipl.-Phys.
(86) Internationale Anmeldenummer: EP9303058
(87) Internationale Veröffentlichungsnummer: WO9413938

(56) Entgegenhaltungen:
- WO-A-92/12334
- US-A- 2 942 932
- US-A- 5 146 743
- PATENT ABSTRACTS OF JAPAN vol. 013, no. 189 (M-821)8. Mai 1989 & JP,A,01 015 421 (YANMAR DIESEL) 19. Januar 1989

## Beschreibung

Die vorliegende Erfindung betrifft ein Verfahren zur Steuerung der Aufheizung eines zumindest in einem kurzen Teilbereich elektrisch schnell aufheizbaren katalytischen Konverters, der einem Verbrennungsmotor eines Kraftfahrzeuges nachgeschaltet ist. Katalytische Konverter dienen zur Minderung des Schadstoffausstoßes in Kraftfahrzeugen, wobei die gesetzlichen Bestimmungen bezüglich der zulässigen Höchstgrenzen von Schadstoffen immer strenger werden. Da katalytische Konverter ohne zusätzliche Beheizung erst nach einer gewissen Aufwärmzeit den Schadstoffausstoß mindern können, werden zur Einhaltung besonders strenger Vorschriften katalytische Konverter vorgesehen, die zumindest in Teilbereichen elektrisch beheizbar sind, so daß sie schneller auf eine für die katalytische Umsetzung erforderliche Temperatur gebracht werden können. Die Entwicklung solcher beheizbarer Wabenkörper ist inzwischen so weit fortgeschritten, daß Bautypen von kleiner Masse und kurzer Länge zur Verfügung stehen, bei denen sich hohe Änderungsgeschwindigkeiten der Temperatur durch elektrische Aufheizung erreichen lassen. Bei entsprechend geringer Oberfläche ist dies auch im noch relativ kühlen Abgasstrom in der Kaltstartphase eines Verbrennungsmotors möglich. Allerdings ist direkt nach dem Starten eines Verbrennungsmotors die Änderungsgeschwindigkeit der Temperatur im Abgassystem ohnehin sehr hoch. Erst nach einiger Zeit nimmt die Änderungsgeschwindigkeit deutlich ab. Hinzu kommen weitere Effekte, z. B. das Verdunsten von im katalytischen Konverter und im Abgassystem davor vorhandenem Wasser, die das Temperaturverhalten des Abgassystems während der Kaltstartphase beeinflussen.

Verschiedene Vorgehensweisen bei der Steuerung solcher beheizbaren Katalysatoren sind beispielsweise in der US 5,146,743 beschrieben, dabei werden unter Umständen die Katalysatoren nicht beheizt bis nach dem Start der Brennkraftmaschine. Allerdings berücksichtigen diese die obigen Überlegungen noch nicht und gelten hauptsächlich für mit geringen Temperaturänderungsgeschwindigkeiten elektrischaufheizbare Wabenkörper. Tatsächlich müssen jedoch auch praktische Gesichtspunkte Berücksichtigung finden, was die Möglichkeiten zur Steuerung eines elektrisch beheizbaren katalytischen Konverters einschränkt. Zunächst einmal steht durch die Kapazität der Fahrzeugbatterie nur eine begrenzte Menge an elektrischer Energie zur Verfügung, die möglichst rationell eingesetzt werden muß, da die Energiereserven für verschiedene Betriebsweisen eines Kraftfahrzeuges, insbesondere auch Kurzstreckenfahrten im Winter, ausreichen müssen. Außerdem ist es aus Gründen der Bequemlichkeit und der Sicherheit in Gefahrensituationen nicht wünschenswert, daß vor dem Starten des Motors zunächst eine Aufheizspanne abgewartet werden muß, bis der Start erfolgen kann. Solche Überlegungen haben im Stand der Technik zu verschiedenen Heizstrategien geführt, die direkt nach dem Starten des Motors beginnen und eine hohe elektrische Leistung für 8 bis 20 Sekunden einbringen. Ziel dabei ist es, die katalytische Umwandlung zumindest in einem Teilbereich des katalytischen Konverters so schnell wie möglich in Gang zu bringen, um die in den Abgasen des Verbrennungsmotors enthaltene chemische Energie baldmöglichst zur weiteren Aufheizung des katalytischen Konverters nutzen zu können.

Ausgehend von diesem Stand der Technik ist es Aufgabe der vorliegenden Erfindung, die zur Verfügung stehende elektrische Energie noch rationeller und wirkungsvoller einzusetzen, um dadurch den Schadstoffausstoß weiter zu verringern, ohne jedoch die elektrische Anlage des Kraftfahrzeuges zu überlasten.

Zur Lösung dieser Aufgabe dient ein Verfahren zur Steuerung der Aufheizung eines zumindest in einem kurzen Teilbereich elektrisch schnell aufheizbaren katalytischen Konverters, der einem Verbrennungsmotor eines Kraftfahrzeuges nachgeschaltet ist, wobei die elektrische Beheizung erst mit einer Verzögerung nach dem Starten des Verbrennungsmotors eingeschaltet wird, wenn die Änderungsgeschwindigkeit der Temperatur im beheizbaren Teilbereich des katalytischen Konverters, die durch die in den Abgasen des Verbrennungsmotors enthaltene Wärme verursacht wird, annähernd gleich oder geringer wird als die durch elektrische Beheizung erzielbare Änderungsgeschwindigkeit der Temperatur Dabei geht die Erfindung von der Erkenntnis aus, daß direkt nach dem Start des Verbrennungsmotors die relativ zu dem katalytischen Konverter sehr heißen Abgase diesen ohnehin zunächst sehr schnell aufheizen bevor dan die Änderungsgeschwindigkeit der Temperatur abnimmt. Eine zusätzliche elektrische Beheizung würde kaum eine schnellere Erwärmung erreichen, aber wertvolle elektrische Energie verbrauchen. Dazu kommt, daß sich in der keramischen Beschichtung eines katalytischen Konverters, welche eine sehr große Oberfläche hat, und im Abgassystem davor Wasser ansammeln kann, sei es durch längere Standzeiten des Kraftfahrzeuges oder sei es durch die beim Starten des kalten Motors zunächst kondensierenden Wasseranteile im Abgas. Bei Heizstrategien, bei denen vor oder unmittelbar nach dem Starten des Verbrennungsmotors geheizt wird, wird wertvolle elektrische Energie auch dazu verwendet, Wasser aus dem katalytischen Konverter zu verdunsten, da dessen Temperatur erst nach dem Verdunsten des Wassers auf eine für die katalytische Umsetzung notwendige Temperatur von z.B. 350° C gebracht werden kann. Gemäß der vorliegenden Erfindung wird die Wärme im Abgas des Verbrennungsmotors in den ersten Sekunden zur schnellen Aufheizung des katalytischen Konverters und auch dazu ausgenutzt, das Wasser im katalytischen Konverter zu verdunsten. Erst später, wenn die durch das Abgas erzielbare Änderungsgeschwindigkeit der Temperatur im katalytischen Konverter deutlich abnimmt, wird die elektrische Beheizung zugeschaltet, so daß die zur Verfügung stehende elektrische Energie sehr effektiv zur schnellen weiteren Aufheizung eines kleinen Teilbereiches auf die für die katalytische Umsetzung notwendige Temperatur ausgenutzt werden kann. Dabei kommen Heizleistungen von 750 bis 2.500 Watt entsprechend etwa 75 bis 250 Ampere bei einer 12 Volt-Anlage, vorzugsweise 1.000 bis 2.000 Watt, als günstige Werte in Betracht. Allerdings sind auch höhere Stromstärken möglich. Der aufzuheizende Teilbereich braucht nur einige Millimeter lang zu sein, beispielsweise 3 bis 20 mm, vorzugsweise 6 bis 15 mm, da eine so beheizte Scheibe die Stirnseite eines nachfolgenden Wabenkörpers mit aufheizt und die in der beheizten Scheibe durch katalytische Umsetzung freiwerdende Energie ebenfalls sofort zur Aufheizung nachfolgender Teilbereiche beiträgt.
Durch eine geringe Masse und eine kleine Oberfläche lassen sich eine schnelle Aufheizung und eine auch im Abgasstrom 150 bis 200° C über dessen Temperatur liegende Temperaturen im beheizbaren Teilbereich erzielen.

Gemäß diesen Überlegungen beginnt die Beheizung z. B. etwa 3 bis 10 Sekunden, vorzugsweise etwa 5 Sekunden, nach dem Starten des Verbrennungsmotors und dauert je nach Motorbetrieb und verfügbarer elektrischer Leistung beispielsweise 5 bis 25 Sekunden, vorzugsweise etwa 10 bis 20 Sekunden.

Noch günstiger ist es, den genauen Beginn der Beheizung in Abhängigkeit von der Außentemperatur und/oder der Motortemperatur und/oder der Temperatur im katalytischen Konverter selbst festzulegen. Auch andere Meßwerte, die der Motorsteuerung zur Verfügung stehen können berücksichtigt werden. Ziel ist es, nicht unnötig elektrische Energie einzusetzen. Insbesondere können für einzelne physikalische Größen Grenzwerte festgelegt werden, ab denen eine elektrische Beheizung ganz unterbleibt. So ist eine Beheizung natürlich bei betriebswarmem Motor oder insbesondere bei noch heißem katalytischen Konverter sinnlos. Auch bei bestimmten Werten der Außentemperatur kann die elektrische Beheizung kaum noch zusätzliche Wirkung erzielen, beispielsweise ab 35°C. Aus Gründen der Batteriekapazität kann auch unterhalb bestimmter Außentemperaturen, z. B. unterhalb eines vom jeweiligen Gesetzgeber festzulegenden Wertes, auf die elektrische Beheizung verzichtet werden, um die Batterie nicht zu überlasten.

Unterstützt werden kann die erfindungsgemäße Heizstrategie insbesondere dadurch, daß der Verbrennungsmotor vor dem Einschalten der Beheizung mit erhöhter Leerlaufdrehzahl und magerem Gemisch betrieben wird. Nach dem Einschalten der Beheizung, wenn zumindest der beheizbare Teilbereich des katalytischen Konverters eine zur Konvertierung von Kohlenmonoxid und/oder Kohlenwasserstoffen genügend hohe Temperatur erreicht hat, kann der Motor mit erniedrigter Leerlaufdrehzahl und fettem Gemisch betrieben werden. Die erste Maßnahme bewirkt eine hohe Wärmeerzeugung in der Anfangsphase, während die zweite Maßnahme eine höhere chemische Energie nach Erreichen der für die katalytische Umsetzung notwendigen Temperatur im Katalysator bereitstellt so daß exotherme Reaktionen ablaufen und weitere Teile des katalytischen Konverters aufheizen. Bei der vorliegenden Erfindung wird daher bevorzugt nicht die Heizstrategie an eine vorgegebene Motorsteuerung angepaßt, sondern vielmehr die Motorsteuerung auf die Heizstrategie abgestimmt. Die Verringerung der Drehzahl, d.h. die Verminderung des Abgasdurchsatzes im katalytischen Konverter kann vorzugsweise in einer oder mehreren Stufen erfolgen, wobei diese Stufen jeweils bei Temperaturen im katalytischen Konverter liegen sollten, bei denen Durchsatzreduzierungen eine Temperaturerhöhung zur Folge haben. Solche Zustände können aufgrund der komplizierten chemisch-physikalischen Vorgänge in einem katalytischen Konverter gerade bei transienten Vorgängen wie der Kaltstartphase auftreten. Bei gerade einsetzender katalytischer Umsetzung ist die Oberfläche des katalytischen Konverters mit "reaktionsbereiten Reaktionspartnern" gesättigt, so das bei einer Durchsatzreduzierung zwar die Kühlwirkung des Abgasstromes vermindert, aber nicht die chemische Reaktion sofort gemindert wird. Solche von Anlage zu Anlage unterschiedlichen Effekte können z. B. bei der Heizstrategie in der Kaltstartphase mit ausgenutzt werden.

Grundsätzlich kann das Ein- und Ausschalten der elektrischen Beheizung durch Zeitintervalle bestimmt werden, jedoch ist es günstiger, das Ende der Heizperiode durch eine Temperaturmessung zu bestimmen, welche bevorzugt in einem dem elektrisch beheizbaren Teilbereich direkt nachgeschalteten Teil des katalytischen Konverters vorgenommen werden sollte, da es auf die dortige Temperatur für die weitere Aufheizung der katalytischen Konverters ankommt.

Prinzipiell können Beginn und/oder Ende der Beheizung auch unter Einbeziehung von Daten der Steuerung des Verbrennungsmotor ermittelt werden, indem die im Verbrennungsmotor erzeugte Wärmeenergie z. B. aus den gemessenen Luft- und Kraftstoffmengen ermittelt wird, wobei andere Meßwerte wie z.B. die Kühlwassertemperatur und die Außentemteratur mit berücksichtigt werden können.

Eine andere Möglichkeit besteht darin, daß der Heizbeginn und das Heizende und damit die einzubringende Heizenergie vorgegeben werden und der Verbrennungsmotor entsprechend gesteuert wird. Eingriffe in das Leerlaufverhalten eines Motors während der ersten etwa 20 Sekunden der Kaltstartphase stellen keine besondere Beeinträchtigung des Fahrkomforts und überhaupt keine Beeinträchtigung der Fahrsicherheit dar, so daß es durchaus sinnvoll sein kann, beim Kaltstart bestimmte Mindestund Höchstdrehzahlen und bestimmte Werte für das Kraftstoff/Luft-Gemisch vorzugeben.

Eine weitere Verbesserung des Schadstoffausstoßes kann erreicht werden, indem zwischen den Verbrennungsmotor und den katalytischen Konverter eine Adsorptionsvorrichtung für Kohlenwasserstoffe und/oder Kohlenmonoxid, insbesondere ein Zeolithkörper, geschaltet wird, welche mittels einer Bypass-Leitung umgehbar ist. Vor Erreichen einer zur Konvertierung genügend hohen Temperatur im katalytischen Konverter wird das Abgas durch die Adsorptionsvorrichtung geleitet, wobei ein großer Teil der Kohlenwasserstoffe im Zeolithkörper adsorbiert wird. Bei Erreichen der für eine katalytische Umsetzung notwendigen Temperatur, wird das Abgas dann durch die Bypass-Leitung an der Adsorptionsvorrichtung vorbei geleitet, um durch Umsetzung des Abgases den katalytischen Konverter schnell weiter aufzuheizen. Später erhitzt sich dann die Adsorptionsvorrichtung beim weiteren Betrieb des Kraftfahrzeuges, auch wenn sie nicht vom Abgas durchströmt wird, so weit, daß die adsorbierten Kohlenwasserstoffe wieder entweichen und im katalytischen Konverter in unschädliche Bestandteile umgesetzt werden können.

Im allgemeinen muß für einen elektrisch beheizbaren katalytischen Konverter zur Vermeidung von gefährlichen Betriebszuständen oder gar Schäden eine Sicherheit gegenüber Überhitzung vorgesehen werden.

Hierfür eignen sich an sich bekannte Temperatursensoren oder andere Meßfühler, die beispielsweise das Auftreten von Zündaussetzern im Verbrennungsmotor feststellen können. Bei der sich abzeichnenden Gefahr einer Überhitzung muß zunächst die Beheizung des katalytischen Konverters abgeschaltet werden. Eventuell sind weitere Maßnahmen wie die Änderung des Kraftstoff/Luft-Gemisches, eine Schubabschaltung oder dergleichen in der Motorsteuerung erforderlich.

Ein Ausführungsbeispiel der Erfindung, auf welches diese jedoch nicht beschränkt ist, und ein Diagramm zur Erläuterung der Heizstrategie sind schematisch in der Zeichnung dargestellt, und zwar zeigen:
Fig. 1 den prinzipiellen Aufbau eines Motors mit Abgasanlage und
Fig. 2 ein Diagramm über Temperaturverläufe im katalytischen Konverter während der Kaltstartphase.

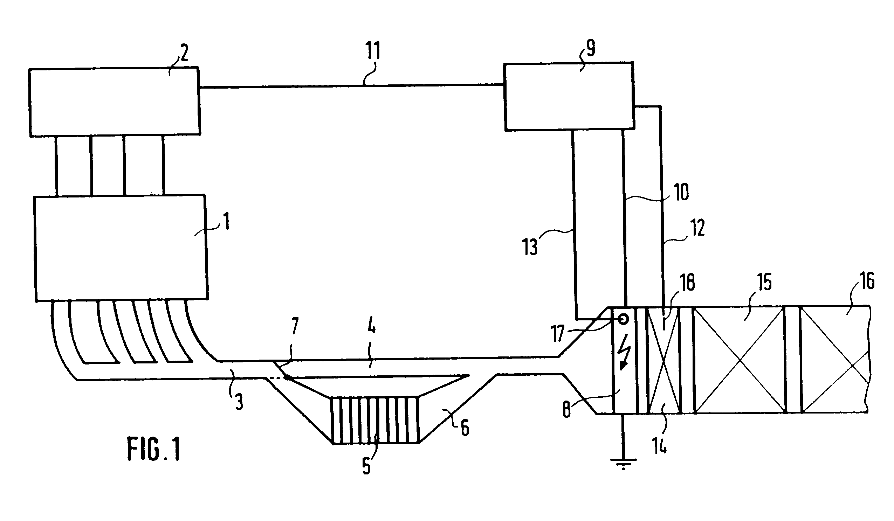

In Figur 1 ist ein Verbrennungsmotor 1 mit einer Motorsteuerung 2 und einem Abgasauslaß 3 gezeigt. Dieser steht über eine Leitung 4 mit einem aus mehreren Teilbereichen bestehenden katalytischen Konverter 8, 14, 15, 16 in Verbindung. Der vorderste Teilbereich 8 ist elektrisch beheizbar, wobei die Beheizung von einer Heizungssteuerung 9 über eine Heizzuleitung 10 ausgelöst wird. Dem beheizbaren Teilbereich 8 ist ein Vorkatalysator 14 nachgeschaltet, welchem ein oder mehrere Hauptkatalysatoren, 15, 16 folgen. Die einzelnen Teilbereiche des Katalysators 8, 14, 15, 16 können auch in einzelnen, durch Leitungsabschnitte verbundenen Gehäusen untergebracht sein, was für die vorliegende Erfindung keine entscheidende Rolle spielt. Auch können die Durchmesser, der Aufbau und die Zahl der Strömungskanäle pro Querschnittsfläche in den einzelnen Teilbereichen verschieden sein. Günstig ist jedenfalls eine räumlich enge Anordnung, da dadurch unnötige Wärmeverluste auf Zwischenabschnitten vermieden werden. Ein Temperatursensor 18 im Vorkatalysator 14 steht über eine Meßleitung 12 mit der Heizungssteuerng 9 in Verbindung. Eine zusätzliche Meßsonde 17 am beheizbaren Teilbereich 8 steht über eine Meßleitung 13 ebenfalls mit der Heizungssteuerung in Verbindung und kann das Überschreiten einer Grenztemperatur in ihrer Umgebung feststellen. Zwischen der Motorsteuerung 2 und der Heizungssteuerung 9 besteht eine Verbindung 11, mit welcher je nach der vorgesehen Heizstrategie Daten in einer oder beiden Richtungen übermitteln werden können. Parallel zu der Abgasleitung 4 kann in einen Seitenzweig 6 eine Adsorptionsvorrichtung 5 zur Adsorption von Kohlenwasserstoffen in der Kaltstartphase geschaltet sein. Ein Ventil oder eine Klappe 7 steuern den Abgasfluß entweder durch die Adsorptionsvorrichtung oder durch die Abgasleitung 4, die als Bypass-Leitung zum Seitenzweig 6 dient.

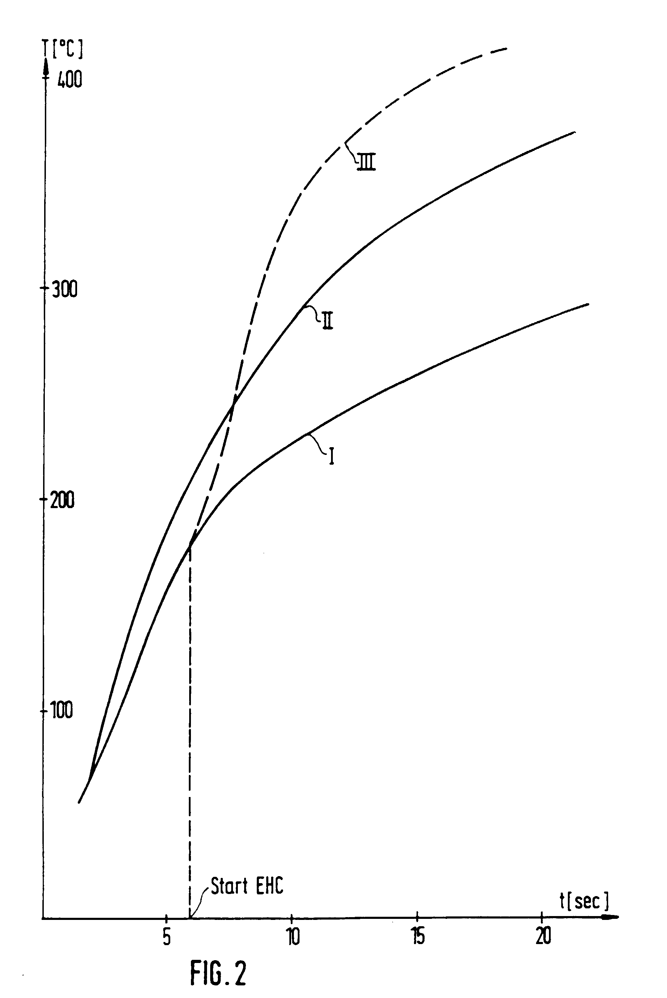

Fig. 2 zeigt ein qualitatives Diagramm, bei welchem auf der X-Achse die Zeit t und auf der Y-Achse die Temperatur T aufgetragen sind. Die Kurve I zeigt den Temperaturverlauf im katalytischen Konverter ohne elektrische Beheizung während der Kaltstartphase. Kurve II zeigt den Temperaturverlauf bei direkt nach dem Start beginnender elektrischer Beheizung eines relativ großen und massereichen Teilabschnittes eines katalytischen Konverters. Kurve III zeigt den Temperaturverlauf bei der erfindungsgemäßen Heizstrategie, wobei einem relativ kleinen Teilbereich des katalytischen Konverters die gleiche Leistung wie bei Kurve II, jedoch über ein kürzeres Zeitintervall zugeführt wird. Man sieht unmittelbar, daß bei Kurve III viel höhere Temperaturen in kürzerer Zeit erreicht werden als bei Kurve II, ohne daß elektrische Energie verbraucht wird, wo das Abgas nahezu die gleiche Temperaturänderungsgeschwindigkeit bewirken kann.

Mit dem erfindungsgemäßen Verfahren kann eine elektrische Beheizung eines katalytischen Konverters unter optimaler Ausnutzung der zur Verfügung stehenden elektrischen Energie durchgeführt werden, so daß strenge Abgasvorschriften mit vernünftigem Aufwand eingehalten werden können.

## Patentansprüche

1. Verfahren zur Steuerung der Aufheizung eines zumindest in einem kurzen Teilbereich (8) elektrisch schnell aufheizbaren katalytischen Konverters (8, 14, 15, 16), der einem Verbrennungsmotor (1) eines Kraftfahrzeuges nachgeschaltet ist,
dadurch gekennzeichnet,
daß die elektrische Beheizung (13) erst mit einer Verzögerung nach dem Starten des Verbrennungsmotors (1) eingeschaltet wird, wenn die Änderungsgeschwindigkeit der Temperatur im beheizbaren Teilbereich (8) des katalytischen Konverters (8, 14, 15, 16), die durch die in den Abgasen des Verbrennungsmotors (1) enthaltene Wärme verursacht wird, annähernd gleich oder geringer wird als die durch elektrische Beheizung erzielbare Änderungsgeschwindigkeit der Temperatur.

2. Verfahren nach Anspruch 1, dadurch gekennzeichnet, daß die elektrische Beheizung (13) nach etwa 3 bis 10 sec, vorzugsweise etwa 5 sec, eingeschaltet wird.

3. Verfahren nach Anspruch 1, dadurch gekennzeichnet, daß der genaue Zeitpunkt des Beginns der Beheizung in Abhängigkeit von der Außentemperatur und/oder der Motortemperatur und/oder der Katalysatortemperatur festgelegt wird.

4. Verfahren nach Anspruch 3, dadurch gekennzeichnet, daß bei Über- oder Unterschreitung von vorgebbaren Schwellwerten der Außentemperatur und/oder der Motortemperatur und/oder der Katalysatortemperatur keine elektrische Beheizung erfolgt.

5. Verfahren nach Anspruch 1, 2, 3 oder 4, dadurch gekennzeichnet, daß der Verbrennungsmotor (1) zumindest vor dem Einschalten der Beheizung (13) mit erhöhter Leerlaufdrehzahl und magerem Gemisch betrieben wird.

6. Verfahren nach einem der vorhergehenden Ansprüche, dadurch gekennzeichnet, daß der Verbrennungsmotor (1) nach dem Einschalten der Beheizung (13), wenn zumindest der beheizbare Teilbereich (8) des katalytischen Konverters (8, 14, 15, 16) eine zur Konvertierung von Kohlenmonoxid und Kohlenwasserstoffen genügend hohe Temperatur erreicht hat, mit erniedrigter Leerlaufdrehzahl und fetterem Gemisch betrieben wird.

7. Verfahren nach Anspruch 6, dadurch gekennzeichnet, das die Änderung der Leerlaufdrehzahl, d.h. die Änderung des Abgasdurchsatzes im katalytischen Konverter, in einer oder mehreren Stufen erfolgt, vorzugsweise jeweils bei Temperaturen im katalytischen Konverter, bei denen Durchsatzreduzierungen eine Temperaturerhöhung zur Folge haben.

8. Verfahren nach einem der vorhergehenden Ansprüche, dadurch gekennzeichnet, daß das Erreichen einer zur Konvertierung genügend hohen Temperatur durch eine Temperaturmessung (18) in einem dem elektrisch beheizbaren Teilbereich (8) nachgeschalteten Teil (14) des des katalytischen Konverters (8, 14, 15, 16), insbesondere in einem Vorkatalysator (14) festgestellt wird.

9. Verfahren nach einem der vorhergehenden Ansprüche, dadurch gekennzeichnet, daß der genaue Beginn der Beheizung (13) und/oder deren Ende unter Einbeziehung von Daten der Steuerung des Verbrennungsmotors (1) ermittelt wird, indem die im Verbrennungsmotor (1) erzeugte Wärmeenergie z. B. aus den gemessenen Luft- und Kraftstoffmengen, ermittelt wird.

10. Verfahren nach einem der Ansprüche 1 bis 5, dadurch gekennzeichnet, daß der Heizbeginn und das Heizende und damit die einzubringende Heizenergie vorgegeben werden und der Verbrennungsmotor (1) so gesteuert wird, daß vor dem Erreichen einer zur Konvertierung genügend hohen Temperatur möglichst geringe Mengen an Schadstoffen und möglichst viel Wärme erzeugt werden.

11. Verfahren nach einem der vorhergehenden Ansprüche, wobei zwischen den Verbrennungsmotor (1) und den katalytischen Konverter (8, 14, 15, 16) eine Adsorptionsvorrichtung (5) für Kohlenwasserstoffe und/oder Kohlenmonoxid, insbesondere ein Zeolithkörper (5), geschaltet ist, welche mittels einer Bypass-Leitung (4) umgehbar ist, dadurch gekennzeichnet, daß vor Erreichen einer zur Konvertierung genügend hohem Temperatur im katalytischen Konverter (8, 14, 15, 16) das Abgas durch die Adsorptionsvorrichtung (5) und erst später durch die Bypass-Leitung (4) an der Adsorptionsvorrichtung (5) vorbei geleitet wird.

12. Verfahren nach einem der vorhergehenden Ansprüche, dadurch gekennzeichnet. daß die Beheizung (13) beendet wird, falls Temperatursensoren (18) oder andere Meßfühler (17), z.B. bei Zündaussetzern im Verbrennungsmotor (1), die Gefahr einer Überhitzung im katalytischen Konverter (8, 14, 15, 16) melden.

## Claims

1. A method of controlling the heating of a catalytic converter (8, 14, 15, 16) which is connected downstream of an internal combustion engine (1) of a motor vehicle and which can be electrically rapidly heated in a short portion (8) thereof, characterised in that the electrical heating (13) is switched on only with a delay after the internal combustion engine (1) is started if the rate of change in the temperature in the heatable portion (8) of the catalytic converter (8, 14, 15, 16), which is caused by the heat contained in the exhaust gases of the internal combustion engine (1), becomes approximately equal to or less than the rate of change in the temperature, which can be achieved by electrical heating.

2. A method according to claim 1 characterised in that the electrical heating (13) is switched on after about 3 to 10 seconds, preferably after about 5 seconds.

3. A method according to claim 1 characterised in that the precise time of beginning heating is established in dependence on the external temperature and/or the engine temperature and/or the catalyst temperature.

4. A method according to claim 3 characterised in that no electrical heating is effected when the external temperature and/or the engine temperature and/or the catalyst temperature rise above or fall below predeterminable threshold values.

5. A method according to claim 1, claim 2, claim 3 or claim 4 characterised in that the internal combustion engine (1) is operated with an increased idle speed and a weak mixture at least before the heating (13) is switched on.

6. A method according to one of the preceding claims characterised in that the internal combustion engine (1) is operated at a reduced idle speed and a richer mixture after the heating (13) is switched on if at least the heatable portion (8) of the catalytic converter (8, 14, 15, 16) has reached a temperature which is sufficiently high for the conversion of carbon monoxide and hydrocarbons.

7. A method according to claim 6 characterised in that the change in the idle speed, that is to say the change in the exhaust gas throughput in the catalytic converter takes place in one or more stages, preferably in each case at temperatures in the catalytic converter at which throughput reductions result in an increase in temperature.

8. A method according to one of the preceding claims characterised in that the attainment of a temperature which is sufficiently high for the conversion effect is detected by a temperature measuring means (18) in a part (14) of the catalytic converter (8, 14, 15, 16) which is connected downstream of the electrically heatable portion (8), in particular in a pre-catalyst (14).

9. A method according to one of the preceding claims characterised in that the precise beginning of heating (13) and/or the end thereof is ascertained with the incorporation of data from the control of the internal combustion engine (1) by the heat energy produced in the internal combustion engine (1) being ascertained for example from the measured amounts of air and fuel.

10. A method according to one of claims 1 to 5 characterised in that the beginning of heating and the end of heating and thus the heat energy to be introduced are predetermined and the internal combustion engine (1) is so controlled that minimum amounts of pollutants and as much heat as possible are produced prior to the attainment of a temperature which is sufficiently high for the conversion effect.

11. A method according to one of the preceding claims wherein connected between the internal combustion engine (1) and the catalytic converter (8, 14, 15, 16) is an adsorption device (5) for hydrocarbons and/or carbon monoxide, in particular a zeolite body (5) which can be bypassed by means of a bypass conduit (4), characterised in that prior to the attainment of a temperature in the catalytic converter (8, 14, 15, 16) which is sufficiently high for the conversion effect the exhaust gas is passed through the adsorption device (5) and only later guided past the absorption device (5) through the bypass conduit (4).

12. A method according to one of the preceding claims characterised in that the heating (13) is terminated if temperature sensors (18) or other measuring sensors (17) signal the risk of overheating in the catalytic converter (8, 14, 15, 16), for example in the event of misfiring in the internal combustion engine (1).

## Revendications

1. Procédé pour commander le chauffage d'un convertisseur catalytique (8, 14, 15, 16), pouvant être chauffé électriquement rapidement au moins dans une courte zone partielle (8) et qui est disposé en aval d'un moteur à combustion interne (1) d'un véhicule automobile,
caractérisé en ce que
le chauffage électrique (13) est branché avec un retard après le démarrage du moteur à combustion interne (1), uniquement lorsque la vitesse de variation de la température dans la zone partielle pouvant être chauffée (8) du convertisseur catalytique (8,14,15,16), qui est provoquée par la chaleur contenue dans les gaz d'échappement du moteur à combustion interne (1), est approximativement égale ou inférieure à la vitesse de variation de la température, qui peut être obtenue au moyen du dispositif de chauffage électrique.

2. Procédé selon la revendication 1, caractérisé en ce que le chauffage électrique (3) est branché au bout d'environ 3 à 10 s, de préférence au bout d'environ 5 s.

3. Procédé selon la revendication 1, caractérisé en ce que l'instant précis du début du chauffage est fixé en fonction de la température extérieure / ou de la température du moteur et/ou de la température du catalyseur.

4. Procédé selon la revendication 3, caractérisé en ce que dans le cas du dépassement, par le haut ou par le bas, de valeurs de seuil pouvant être prédéterminées de la température extérieure et/ou de la température du moteur et/ou de la température du catalyseur, aucun chauffage électrique n'est appliqué.

5. Procédé selon la revendication 1, 2, 3 ou 4, caractérisé en ce que le moteur à combustion interne (1) fonctionne, au moins avant le branchement du dispositif de chauffage (13), avec une vitesse de rotation de ralenti accrue et un mélange pauvre.

6. Procédé selon l'une des revendications précédentes, caractérisé en ce que le moteur à combustion interne (1) fonctionne avec une vitesse de rotation de ralenti réduite et un mélange plus riche après l'activation du chauffage (13), lorsqu'au moins la zone partielle pouvant être chauffée (8) du convertisseur catalytique (8,14,15,16) a atteint une température suffisamment élevée pour la conversion du monoxyde de carbone et des carbures d'hydrogène.

7. Procédé selon la revendication 6, caractérisé en ce que la variation de la vitesse de rotation de ralenti, c'est-à-dire la modification du débit des gaz d'échappement dans le convertisseur catalytique, s'effectue en une ou plusieurs étapes, de préférence respectivement à des températures dans le convertisseur catalytique, pour lesquelles des réduction du débit entraîne un accroissement de la température.

8. Procédé selon l'une des revendications précédentes, caractérisé en ce que l'obtention d'une température suffisamment élevée pour la conversion est fixée par une mesure de température (18) dans une partie (14), qui est disposée en aval de la zone partielle (8) pouvant être chauffée électriquement, du convertisseur catalytique (8,14,15,16), notamment dans un catalyseur amont (14).

9. Procédé selon l'une des revendications précédentes, caractérisé en ce que le début précis du chauffage (13) et/ou sa fin sont déterminés au moyen de l'insertion de données de la commande du moteur à combustion interne (1), par le fait que l'énergie thermique produite dans le moteur à combustion interne (1) est déterminée par exemple à partir des quantités mesurées d'air et de carburant.

10. Procédé selon l'une des revendications 1 à 5, caractérisé en ce que le début du chauffage et la fin du chauffage et par conséquent l'énergie de chauffage devant être introduite sont prédéterminés et que le moteur à combustion interne (1) est commandé de telle sorte que des quantités aussi faibles que possible de substances nocives et une chaleur aussi élevée que possible sont produites avant que soit atteinte une température suffisamment élevée pour la conversion.

11. Procédé selon l'une des revendications précédentes, selon lequel ente le moteur à combustion interne (1) et le convertisseur catalytique (8,14,15,16) est monté un dispositif d'adsorption (5) pour des carbures d'hydrogène et/ou du monoxyde de carbone, notamment un corps formé de zéolite (5), qui peut être contourné au moyen d'une canalisation de dérivation (4), caractérisé en ce qu'avant que soit atteinte une température suffisamment élevée pour la conversion, dans le convertisseur catalytique (8,14,15,16) les gaz d'échappement traversent le dispositif d'adsorption (5) et sont ensuite seulement amenés, par l'intermédiaire de la canalisation de dérivation (4), à passer à côté du dispositif d'adsorption (5).

12. Procédé selon l'une des revendications précédentes, caractérisé en ce que le chauffage (13) est arrêté dans le cas où des capteurs de température (18) ou d'autres capteurs de mesure (17) signalent, par exemple dans le cas de ratés d'allumage dans le moteur à combustion interne (1), le risque d'un échauffement excessif dans le convertisseur catalytique (8,14,15,16).
